# FASCICULE DE BREVET EUROPEEN

(11) **EP 3 903 170 B1**
(45) Date de publication et mention de la délivrance du brevet: **06.03.2024**
(21) Numéro de dépôt: 19839644.2
(22) Date de dépôt: 09.12.2019
(51) Int. Cl.: G06F 3/01, G06F 3/03

(54) **PROCÉDÉ DE COMMANDE D'UN SYSTÈME DE RÉALITÉ VIRTUALISÉE, ET SYSTÈME POUR LA MISE EN OEUVRE DU PROCÉDÉ**
VERFAHREN ZUR STEUERUNG EINES SYSTEMS DER VIRTUELLEN REALITÄT UND SYSTEM ZUR DURCHFÜHRUNG DES VERFAHRENS
METHOD FOR CONTROLLING A VIRTUALISED REALITY SYSTEM, AND SYSTEM FOR IMPLEMENTING THE METHOD

(30) Priorité: 28.12.2018 FR 1874311
(43) Date de publication de la demande: 03.11.2021
(73) Titulaire: Orange, 92130 Issy-les-Moulineaux (FR)
(72) Inventeur: LEROUX, Sylvain, 92326 CHÂTILLON CEDEX (FR); GAILLET, Thierry, 92326 CHÂTILLON CEDEX (FR)
(74) Mandataire: Plasseraud IP
(86) Numéro de dépôt international: PCT/FR2019/052968
(87) Numéro de publication internationale: WO 2020/136316

(56) Documents cités:
- WO-A1-2018/106735
- US-A1- 2015 092 015
- US-A1- 2018 373 412
- PETROS SPACHOS ET AL: "Microlocation for Smart Buildings in the Era of the Internet of Things: A Survey of Technologies, Techniques, and Approaches", IEEE SIGNAL PROCESSING MAGAZINE., vol. 35, no. 5, 28 août 2018 (2018-08-28), pages 140-152, XP055630426, US ISSN: 1053-5888, DOI: 10.1109/MSP.2018.2846804

## Description

### Domaine technique

La présente invention se rapporte à un procédé de commande d'un système de réalité virtualisée comprenant un dispositif de réalité virtualisée, ainsi qu'à un système, un programme d'ordinateur et un support de stockage pour la mise en oeuvre de ce procédé. Elle s'applique notamment aux dispositifs portables de réalité virtuelle, tels que des casques, ou aux dispositifs de réalité augmentée, tels que des lunettes de réalité augmentée.

### Technique antérieure

Le développement de l'usage de la réalité virtuelle reste encore très modeste, limité à quelques niches comme le gaming ou le training, et ce à cause de nombreux freins et obstacles.

A titre d'exemples, on peut citer l'impression d'immersion qui est limitée par les contraintes physiques actuelles liées à l'utilisation de câbles entravant la mobilité des personnes et la fluidité de leurs gestes, le manque de réactivité et de fluidité du contenu diffusé lié aux débits insuffisants, le problème d'adaptation aux petits espaces, entraînant des risques pour les personnes (chocs, chutes, etc.) et la dégradation de leur environnement (meubles, tapis, etc.), la difficulté des expériences multi-users/joueurs car ceux-ci se télescopent et se gênent mutuellement, les problèmes de stress, crispations et potentiellement de nausées des utilisateurs, l'ignorance des modifications potentielles de l'environnement depuis le début de l'expérience de réalité virtuelle (nouveaux spectateurs, intrusion ou départ, alerte sonore, etc.) et l'absence de notification ou de graduation dans le retour environnemental : nouvel utilisateur, mobilier, intrusion, limite du câble, etc.

Dans le monde du travail, s'ajoutent des contraintes liées aux normes de sécurité, d'isolement, d'alerte incendie, etc.
Le document US 2018/0373412 A1 décrit un système de réalité virtuelle qui identifie une région limite comprenant une zone de sécurité.

### Problème technique

Certaines solutions connues, telles que l'installation spécifique de cages, la réservation de pièce dédiée, la présence d'un assistant/surveillant, la pose de marqueurs au sol avec tapis et reliefs (à la manière des bandes rugueuses ou plots pour aveugles) s'avèrent particulièrement coûteuses et peu polyvalentes. Les utilisateurs ne pouvant pas les utiliser sont alors amenés à s'auto-censurer dans leur expérience de réalité virtuelle, notamment en réduisant l'espace dédié à cette expérience, ce qui entraîne des frustrations.

Un objet de la présente invention est de remédier au moins partiellement aux inconvénients précités.

Selon un premier aspect, il est proposé un procédé de commande tel que défini par la revendication 1.

Le procédé proposé permet avantageusement de délimiter, sur une surface sur laquelle l'utilisateur d'un dispositif de réalité virtualisée (dispositif de réalité virtuelle, de réalité augmentée, ou de réalité mixte) se meut, plusieurs zones, parmi lesquelles au moins une zone sans alerte et au moins une zone avec alerte, afin que l'utilisateur puisse recevoir des notifications appropriées en fonction de ses déplacements et mouvements et des modifications de son environnement.

Le procédé proposé est avantageusement applicable à des systèmes et dispositifs de réalité virtuelle, à des systèmes et dispositifs de réalité augmentée, ou à des systèmes et dispositifs dits de « réalité mixte », c'est-à-dire des systèmes et dispositifs de réalité virtuelle enrichis par des systèmes ou des dispositifs de réalité augmentée. Dans le cas de systèmes et dispositifs de réalité augmentée, le procédé proposé permet avantageusement de sécuriser l'utilisateur pour ce qui concerne la partie de son environnement réel qu'il ne perçoit pas (par exemple les obstacles situés dans son dos alors qu'il se déplace).

Les caractéristiques exposées dans les paragraphes suivants peuvent, optionnellement, être mises en oeuvre. Elles peuvent être mises en oeuvre indépendamment les unes des autres ou en combinaison les unes avec les autres :

Dans un ou plusieurs modes de réalisation, la caractéristique relative au signal émis peut en outre prendre une deuxième valeur, la deuxième valeur correspondant à la première zone lorsque la première valeur correspond à la deuxième zone, ou à la deuxième zone lorsque la première valeur correspond à la première zone.

Dans un ou plusieurs modes de réalisation, le signal émis comprend un faisceau lumineux dont l'ouverture est modulée dans le temps, la première valeur et la deuxième valeur correspondant respectivement à au moins une première valeur et au moins une deuxième valeur d'ouverture du faisceau lumineux.

Dans un ou plusieurs modes de réalisation, le faisceau lumineux transmet un signal optique de transmission de données, par exemple de type LiFi.

Dans un ou plusieurs modes de réalisation, le procédé proposé comprend en outre : générer le signal d'alerte sur détection de la réception du signal émis avec la caractéristique ayant la valeur correspondant à la deuxième zone.

Dans un ou plusieurs modes de réalisation, le procédé proposé comprend en outre : sur détection de la réception du signal émis avec la caractéristique ayant la valeur correspondant à la deuxième zone, transmettre à une plateforme de gestion de système un signal de détection, et recevoir le signal d'alerte.

Dans un ou plusieurs modes de réalisation, le procédé proposé comprend en outre : sur réception du signal émis avec la caractéristique ayant la valeur correspondant à la première zone, obtenir un signal de non-alerte.

Dans un ou plusieurs modes de réalisation, le procédé proposé comprend en outre : générer sur une interface utilisateur du dispositif de réalité virtualisée du système de réalité virtualisée une notification utilisateur sur la base du signal d'alerte.

Dans un ou plusieurs modes de réalisation, le procédé proposé comprend en outre : recevoir un message d'intrusion dans une de la pluralité de zones, et générer une notification utilisateur sur la base du message d'intrusion.

Dans un ou plusieurs modes de réalisation, le procédé proposé comprend en outre : configurer le système par apprentissage des zones de la pluralité de zones.

Dans un ou plusieurs modes de réalisation, le procédé proposé comprend en outre : notifier l'utilisateur du signal d'alerte du système en modifiant le contenu de réalité virtualisée présenté à l'utilisateur.

Selon un autre aspect, il est proposé un système de réalité virtualisée comprenant un dispositif de réalité virtualisée comprenant un processeur et un récepteur de communication sans-fil couplé de manière opérationnelle au processeur, le dispositif étant configuré pour la mise en oeuvre d'un procédé selon l'un des modes de réalisation proposés dans la présente demande.

Un autre aspect concerne un programme d'ordinateur, chargeable dans une mémoire associée à un processeur, et comprenant des portions de code pour la mise en oeuvre d'un procédé tel que proposé dans la présente demande lors de l'exécution dudit programme par le processeur.

Un autre aspect concerne un ensemble de données représentant, par exemple par voie de compression ou d'encodage, un programme d'ordinateur tel que proposé dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à gérer un système de réalité virtualisée selon un procédé de commande de système de réalité virtualisée selon l'un des modes de réalisation proposés dans la présente demande.

### Brève description des dessins

D'autres particularités et avantages de la présente invention apparaîtront dans la description ci-après d'exemples de réalisation non limitatifs, en référence aux dessins annexés, dans lesquels :
**Fig. 1a**

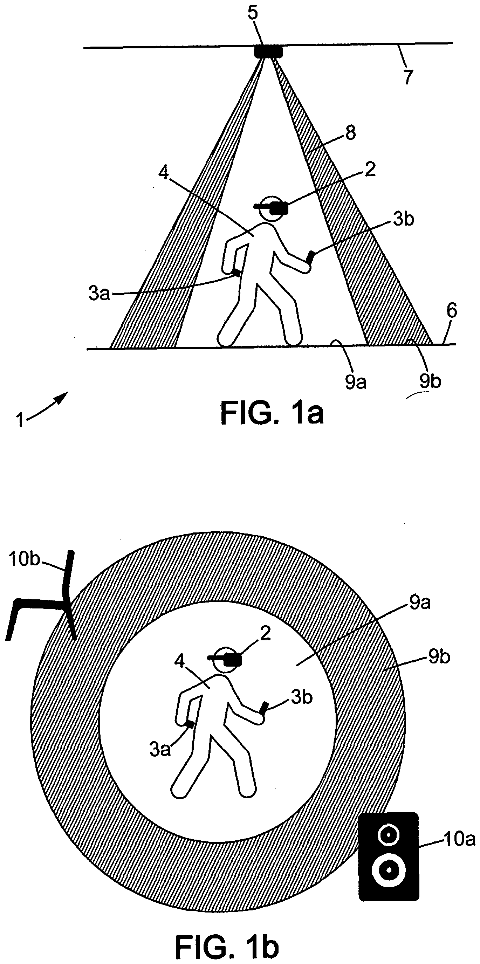

   [Fig. 1a] montre un système de réalité virtuelle selon un ou plusieurs modes de réalisation ;
**Fig. 1b**
   [Fig. 1b] montre un système de réalité virtuelle selon un ou plusieurs modes de réalisation ;
**Fig. 1c**

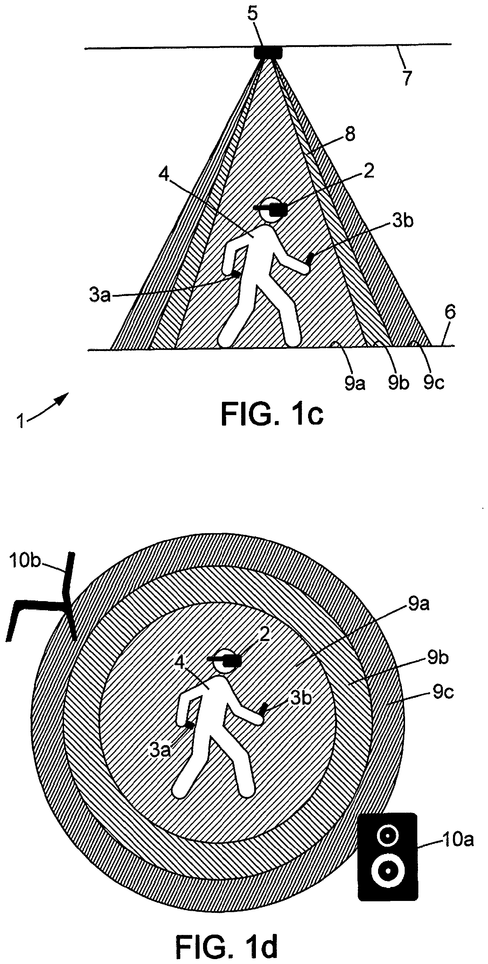

   [Fig. 1c] montre un système de réalité virtuelle selon un ou plusieurs modes de réalisation ;
**Fig. 1d**
   [Fig. 1d] montre un système de réalité virtuelle selon un ou plusieurs modes de réalisation ;
**Fig. 1e**

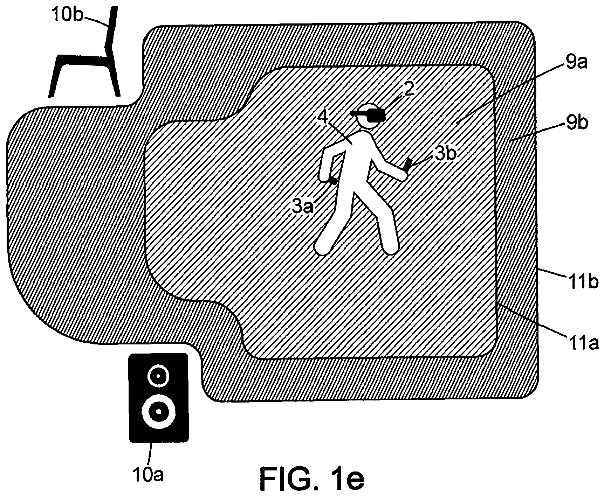

   [Fig. 1e] montre un système de réalité virtuelle selon un ou plusieurs modes de réalisation ;
**Fig. 2a**

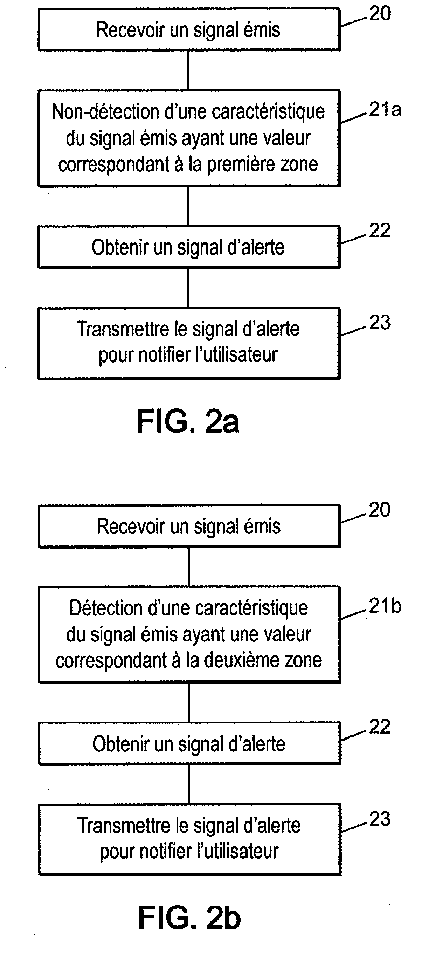

   [Fig. 2a] est un diagramme illustrant un procédé proposé selon un ou plusieurs modes de réalisation ;
**Fig. 2b**
   [Fig. 2b] est un diagramme illustrant un procédé proposé selon un ou plusieurs modes de réalisation ;
**Fig. 3a**

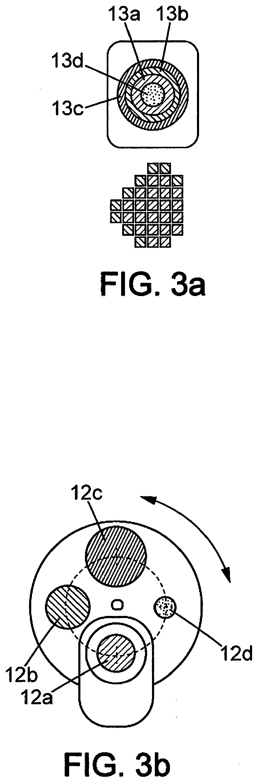

   [Fig. 3a] montre un émetteur de signal lumineux selon un ou plusieurs modes de réalisation ;
**Fig. 3b**
   [Fig. 3b] montre un émetteur de signal lumineux selon un ou plusieurs modes de réalisation ;
**Fig. 3c**

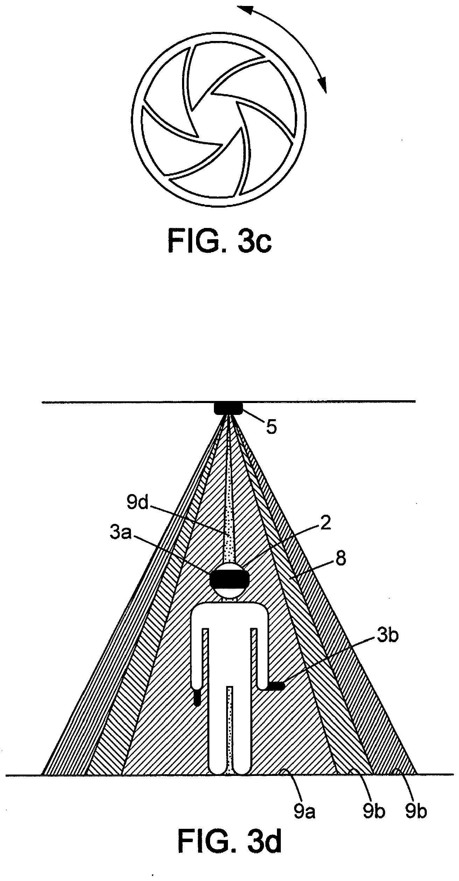

   [Fig. 3c] montre un émetteur de signal lumineux selon un ou plusieurs modes de réalisation ;
**Fig. 3d**
   [Fig. 3d] montre un système de réalité virtuelle selon un ou plusieurs modes de réalisation ;
**Fig. 4a**

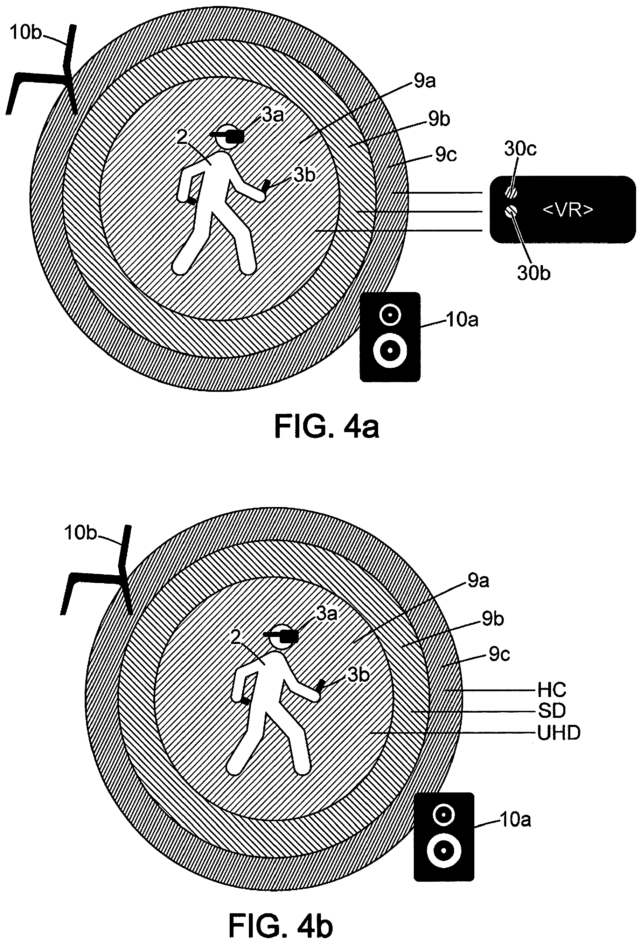

   [Fig. 4a] montre un schéma de notification utilisateur selon un ou plusieurs modes de réalisation ;
**Fig. 4b**
   [Fig. 4b] montre un schéma de notification utilisateur selon un ou plusieurs modes de réalisation ;
**Fig. 5a**

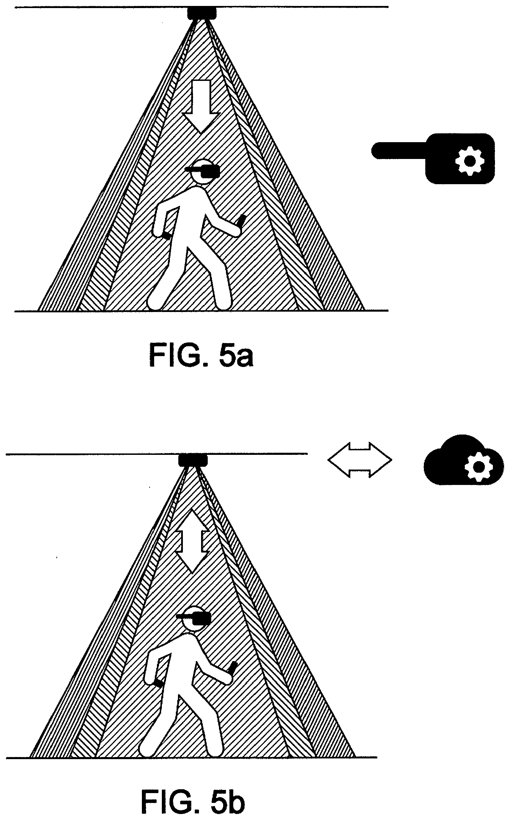

   [Fig. 5a] montre un système de réalité virtuelle selon un ou plusieurs modes de réalisation ;
**Fig. 5b**
   [Fig. 5b] montre un système de réalité virtuelle selon un ou plusieurs modes de réalisation ;
**Fig. 6**

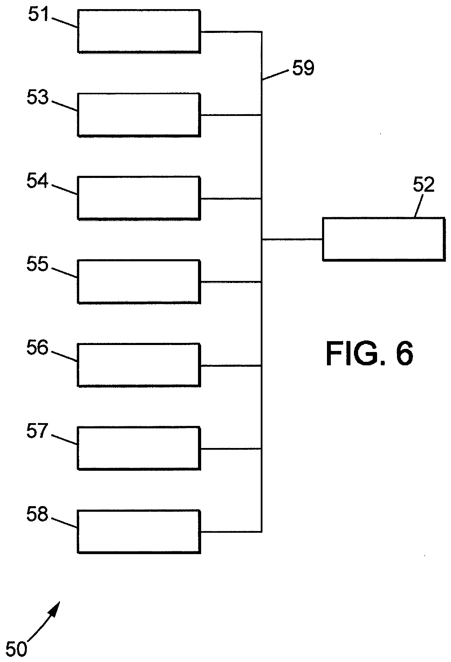

   [Fig. 6] illustre une architecture de dispositif de réalité virtuelle selon un ou plusieurs modes de réalisation.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en oeuvre sous forme matérielle, logicielle (y compris sous forme de logiciel embarqué («firmware»), ou de «middleware»), microcode, ou toute combinaison de ces derniers. Dans le cas d'une mise en oeuvre sous forme logicielle, les fonctions, moteurs, unités, modules et/ou illustrations de diagrammes peuvent être mis en oeuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en oeuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente demande tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans la présente demande font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente demande. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes « réalité virtualisée » tels qu'utilisés dans la présente demande font référence à toutes les technologies de réalité virtuelle (ou « VR », de l'anglais « Virtual Reality »), à toutes les technologies de réalité augmentée (ou « AR », de l'anglais « Augmented Reality »), et à toutes les technologies combinant des technologies de réalité virtuelle et des technologies de réalité augmentée (parfois désignées par les termes « réalité mixte »). Les technologies de réalité virtuelle sont des technologies informatiques qui simulent la présence d'un utilisateur dans un environnement virtuel, par exemple créé par un ou plusieurs flux de données générés par un système informatique et transmis à un ou plusieurs dispositifs de réalité virtuelle utilisés par l'utilisateur (par exemple un casque de réalité virtuelle, des manette(s) de réalité virtuelle), et comprennent notamment les technologies de multimédia immersif et les technologies de réalité simulée par ordinateur. Les technologies de réalité augmentée sont des technologies qui ajoutent à l'expérience d'un utilisateur un traitement de son environnement réel, par exemple en superposant à l'environnement réel de l'utilisateur des éléments virtuels (sons, images, vidéos, etc.) générés par un système informatique. Les technologies de réalité mixte combinent des technologies de réalité virtuelle et des technologies de réalité augmentée pour enrichir l'expérience utilisateur, par exemple en superposant à un environnement virtuel généré par un système informatique des éléments correspondant à l'environnement réel de l'utilisateur.

Ainsi, bien que les exemples de modes de réalisation décrits ci-dessous se rapportent à des technologies de réalité virtuelle, l'homme du métier peut se rendre compte que les procédés, dispositifs et systèmes proposés dans la présente demande ne sont pas limités aux technologies de réalité virtuelle, et qu'ils peuvent être mis en oeuvre aussi bien sur des dispositifs et/ou systèmes utilisant des technologies de réalité virtuelle, que sur des dispositifs et/ou systèmes utilisant des technologies de réalité augmentée ou sur des dispositifs et/ou systèmes utilisant des technologies de réalité mixte. Les systèmes, dispositifs et procédés proposés dans la présente demande sont applicables à tout système ou dispositif de réalité virtuelle, à tout système ou dispositif de réalité augmentée, et à tout système ou dispositif de réalité mixte.

La figure 1a illustre un exemple de système de réalité virtuelle (1) selon un ou plusieurs modes de réalisation.

Le système de réalité virtuelle (1) comprend un premier dispositif de réalité virtuelle (2), agencé comme un casque de réalité virtuelle porté par un utilisateur (4), des deuxième et troisième dispositifs de réalité virtuelle (3a, 3b), qui sont dans l'exemple illustré des manettes tenues à la main par l'utilisateur (4). Le système de réalité virtuelle comprend en outre une unité de gestion de zones (5), agencé dans l'exemple fixée au plafond (7) au-dessus de l'utilisateur (4).

L'unité de gestion de zones (5) est configurée pour émettre vers la surface du sol (6) sur lequel se trouve l'utilisateur (4) un signal (8), dont la portée définit, sur la surface sur laquelle se trouve l'utilisateur (4), au moins deux zones, dont une première zone sans alerte (9a) et une deuxième zone avec alerte (9b). Le signal définit sur la surface (6) un contour qui peut être de différentes formes selon le mode de réalisation, comme par exemple de forme circulaire comme illustré sur la figure 1b.

En référence à la figure 1b, l'utilisateur se trouve dans une zone sans alerte (9a) ayant substantiellement la forme d'un disque. La zone sans alerte (9a) est entourée par une zone avec alerte (9b), ayant substantiellement la forme d'un anneau entourant la zone sans alerte (9a) et étant au contact de celle-ci sur sa périphérie intérieure. Ainsi, dans l'exemple illustré, le contour extérieur de la zone sans alerte (9a) a substantiellement une forme circulaire, de même que le contour extérieur de la zone avec alerte (9b), les deux contours étant concentriques, et le contour extérieur de la zone sans alerte (9a) correspond au contour intérieur de la zone avec alerte (9b), de sorte que les deux zones sont en contact sur un de leurs contours respectifs. Comme illustré sur la figure, le système (1) peut de préférence être configuré de manière à ce que la zone avec alerte contienne, en tout ou partie, des objets (10a, 10b) sur lesquels l'utilisateur risque de tomber ou de se cogner. La zone avec alerte (9b) correspond ainsi à une zone pour laquelle l'utilisateur sera notifié que sa sécurité peut être compromise lorsqu'il se trouve dans cette zone.

Dans un ou plusieurs modes de réalisation, les zones (9a, 9b) peuvent être configurées pour correspondre chacune à une notification transmise à l'utilisateur (4).

Les figures 1c et 1d illustrent des exemples de modes de réalisation dans lesquels trois zones sont définies : L'unité de gestion de zones (5) peut être configurée pour émettre vers la surface du sol (6) sur lequel se trouve l'utilisateur (4) un signal (8), dont la portée définit, sur la surface sur laquelle se trouve l'utilisateur (4), trois zones, dont une première zone sans alerte (9a), une deuxième zone avec alerte (9b) (alerte moins sévère) et une troisième zone avec alerte (9c) (alerte plus sévère). En référence à la figure 1c, l'utilisateur se trouve dans une zone sans alerte (9a) ayant substantiellement la forme d'un disque. La zone sans alerte (9a) est entourée par deux zones avec alertes (9b, 9c) : une première zone avec alerte (9b), ayant substantiellement la forme d'un anneau entourant la zone sans alerte (9a) et étant au contact de celle-ci sur sa périphérie intérieure, et une deuxième zone avec alerte (9c), ayant substantiellement la forme d'un anneau entourant la première zone avec alerte (9b) et étant au contact de celle-ci sur sa périphérie intérieure.

Comme illustré sur la figure 1d, la zone sans alerte (9a) et les deux zones avec alerte (9b, 9c) sont configurées pour prendre en compte l'environnement extérieur à l'utilisateur, comme par exemple les objets situés dans l'espace dans lequel se trouve l'utilisateur (4).

Dans d'autres modes de réalisation, l'unité de gestion de zone (5) peut être configurée pour émettre le signal (8) vers la surface (6) du sol de manière à ce que la zone sans alerte (9a), puis les zones avec alerte (9b, 9c) se trouvent successivement dans la portée du signal (8).

De préférence, le système (1) sera configuré de manière à ce que la zone sans alerte soit la plus large possible, eu égard à l'espace disponible pour l'utilisateur (4) dans lequel sa sécurité pendant son utilisation de la réalité virtuelle, et notamment du casque (2) de réalité virtuelle, ne soit pas compromise. La ou les zones avec alerte pourront être configurées de manière à avoir une forme annulaire entourant la zone sans alerte, en fournissant des alertes progressives à l'utilisateur (sous forme, par exemple, d'une notification d'attention pour la première zone d'alerte et d'alerte pour la deuxième), qui ne soient pas trop fines pour que l'utilisateur, recevant une notification, ait le temps d'y réagir.

Dans un ou plusieurs modes de réalisation, les différentes zones pourront être définies de telle sorte que la zone sans alerte soit une zone centrale, la ou les zones avec alerte ayant une forme annulaire et s'étendant substantiellement autour d'au moins une portion de la zone centrale, par exemple tout autour de la zone centrale, comme illustré sur les Figures 1b et 1d.

Bien que les zones illustrées sur les figures 1b et 1d aient des contours, internes et externes, de forme substantiellement circulaire, l'homme du métier peut se rendre compte que les procédés et systèmes proposés dans la présente demande ne sont pas limités à une forme particulière de contours internes et externes des zones avec alerte et sans alerte. En particulier, le contour externe d'une zone pourra ne pas correspondre dans sa forme au contour externe de la zone adjacente, de manière à permettre de s'adapter aux topologies des lieux dans lesquels les procédés et systèmes proposés dans la présente demande sont mis en oeuvre (maisons individuelles, salons professionnels, espace de travail, etc.).

Comme indiqué ci-dessus, les procédés et systèmes proposés dans la présente demande ne sont pas limités à une forme particulière de contours internes et externes des zones avec alerte et sans alerte. La figure 1e montre un exemple de configuration d'une zone sans alerte et d'une zone avec alerte dans laquelle les contours extérieurs respectifs (11a et 11b) de la zone sans alerte (9a) et de la zone avec alerte (9b) ne sont pas de forme substantiellement circulaire, et ne correspondent pas. Le contour extérieur (11b) de la zone avec alerte peut en particulier être configuré de manière à éviter des objets (10a, 10b) placés dans l'espace où l'utilisateur est susceptible d'évoluer s'il n'est pas averti, comme illustré sur la figure.

Les Figures 2a et 2b sont des diagrammes illustrant un procédé proposé selon différents modes de réalisation, mis en oeuvre par un dispositif de réalité virtuelle tel que proposé.

En référence aux figures 2a et 2b, dans un ou plusieurs modes de réalisation, le dispositif de réalité virtuelle proposé est configuré pour recevoir (20) un signal sans fil émis vers une surface sur laquelle se trouve un utilisateur, la portée du signal définissant sur la surface une pluralité de zones comprenant une première zone sans alerte et une deuxième zone avec alerte, une caractéristique relative au signal émis pouvant prendre une valeur (dite première valeur) correspondant, selon le mode de réalisation, à la première zone (figure 2a) ou à la deuxième zone (figure 2b). Ainsi, le dispositif de réalité virtuelle est configuré pour qu'une valeur d'une caractéristique relative au signal émis corresponde à une zone parmi les première et deuxième zones.

Cette première valeur peut, dans un ou plusieurs modes de réalisation, correspondre ou, selon les cas, appartenir à un ensemble de valeurs de la caractéristique relative au signal émis préconfiguré dans le système, et correspondant à une zone (par exemple une zone sans alerte ou une zone avec alerte). Cela permet avantageusement de détecter la présence de l'utilisateur dans une zone grâce à un ensemble prédéfini de valeurs de la caractéristique relative au signal émis qui correspondent à la zone.

Plusieurs cas de figure peuvent être envisagés. Dans un premier cas de figure, illustré sur la figure 2a, et correspondant à un ou plusieurs modes de réalisation, le dispositif de réalité virtuelle proposé est configuré pour recevoir (20) un signal sans fil émis vers une surface sur laquelle se trouve un utilisateur, la portée du signal définissant sur la surface une pluralité de zones comprenant une première zone sans alerte et une deuxième zone avec alerte, une caractéristique relative au signal émis pouvant prendre une valeur correspondant à la première zone. Ainsi, la zone sans alerte peut être caractérisée par le fait que la portée du signal émis couvre cette zone, une zone avec alerte pouvant alors être caractérisée par le fait que la portée du signal émis ne couvre pas cette zone avec alerte.

Le dispositif peut alors en outre être configuré pour surveiller que le signal reçu l'est avec la caractéristique ayant la valeur et, en cas de non-détection (21a) d'un signal reçu avec une caractéristique ayant la première valeur (correspondant à la première zone), obtenir (22) un signal d'alerte et transmettre (23) le signal d'alerte à une unité de commande du système de réalité virtuelle pour notifier un utilisateur du système de réalité virtuelle.

Dans un deuxième cas de figure, illustré sur la figure 2b, et correspondant à un ou plusieurs modes de réalisation, le dispositif de réalité virtuelle proposé est configuré pour recevoir (20) un signal sans fil émis vers une surface sur laquelle se trouve un utilisateur, la portée du signal définissant sur la surface une pluralité de zones comprenant une première zone sans alerte et une deuxième zone avec alerte, une caractéristique relative au signal émis pouvant prendre une valeur correspondant à la deuxième zone. Ainsi, une zone avec alerte peut être caractérisée par le fait que la portée du signal émis couvre cette zone, la zone sans alerte pouvant alors être caractérisée par le fait que la portée du signal émis ne couvre pas cette zone sans alerte.

Dans un troisième cas de figure, aussi illustré sur la figure 2b, et correspondant à un ou plusieurs modes de réalisation, le dispositif de réalité virtuelle proposé est configuré pour recevoir (20) un signal sans fil émis vers une surface sur laquelle se trouve un utilisateur, la portée du signal définissant sur la surface une pluralité de zones comprenant une première zone sans alerte et une deuxième zone avec alerte, une caractéristique relative au signal émis pouvant prendre une valeur correspondant à la deuxième zone (première valeur), et au moins une autre valeur correspondant à la première zone. Ainsi, une zone avec alerte peut être caractérisée par le fait que la portée du signal émis couvre cette zone, la caractéristique du signal émis ayant alors la première valeur, la zone sans alerte pouvant alors être caractérisée par le fait que la portée du signal émis couvre aussi cette zone sans alerte, la caractéristique du signal émis ayant alors l'autre valeur.

Dans un quatrième cas de figure, aussi illustré sur la figure 2b, et correspondant à un ou plusieurs modes de réalisation, le dispositif de réalité virtuelle proposé est configuré pour recevoir (20) un signal sans fil émis vers une surface sur laquelle se trouve un utilisateur, la portée du signal définissant sur la surface une pluralité de zones comprenant une première zone sans alerte et une deuxième zone avec alerte, une caractéristique relative au signal émis pouvant prendre une valeur correspondant à la deuxième zone (première valeur), et au moins une autre valeur correspondant à une autre zone avec alerte. Ainsi, plusieurs zones avec alerte peuvent être caractérisées par le fait que la portée du signal émis couvre ces zones, la caractéristique du signal émis ayant alors une valeur correspondant à une des zones avec alerte. La zone sans alerte peut alors être caractérisée, selon le mode de réalisation, par le fait que la portée du signal émis ne couvre pas cette zone sans alerte, ou bien par le fait que la portée du signal émis couvre aussi cette zone sans alerte, la caractéristique du signal émis ayant alors une valeur correspondante à la zone sans alerte.

Dans les deuxième, troisième et quatrième cas de figure précités (figure 2b), le dispositif peut en outre être configuré pour surveiller que le signal reçu l'est avec la caractéristique ayant la première valeur (correspondant à la seconde zone) et, le cas échéant, le détecter (21b). Il peut en outre être configuré pour, sur détection de la caractéristique ayant la valeur, obtenir (22) un signal d'alerte, et transmettre (23) le signal d'alerte à une unité de commande du système de réalité virtuelle pour notifier un utilisateur du système de réalité virtuelle.

Le procédé proposé permet ainsi avantageusement de définir au moins une zone d'alerte pour, selon le mode de réalisation, notifier l'utilisateur lorsqu'il pénètre dans cette zone d'alerte ou notifier l'utilisateur lorsqu'il ne se trouve pas dans la zone sans alerte. La présence de l'utilisateur dans cette zone d'alerte ou son absence dans la zone sans alerte est détectée par le biais d'une caractéristique relative au signal émis, qui peut prendre une valeur prédéfinie, et dans le cas de la détection de présence de l'utilisateur dans une zone d'alerte, associée à un niveau d'alerte à notifier à l'utilisateur. Le procédé et le système proposés permettent ainsi avantageusement de notifier une alerte à un utilisateur relative à la position de cet utilisateur par rapport à une zone sans alerte, en n'utilisant qu'un signal sans fil, c'est-à-dire sans restreindre les mouvements de l'utilisateur par des fils.

Dans un ou plusieurs modes de réalisation au delà de la portée de l'invention, le dispositif de réalité virtuelle peut être configuré pour détecter que la caractéristique relative au signal émis a la valeur (correspondant à la première ou la deuxième zone) dès lors qu'il détecte la réception du signal. Ainsi, les émissions de signal peuvent être avantageusement diminuées en n'émettant pas pour, selon le mode de réalisation, couvrir la zone sans alerte et en n'émettant que pour couvrir une zone avec alerte, ou à l'inverse couvrir la zone avec alerte et en n'émettant que pour couvrir la zone sans alerte.

Dans les modes de réalisation où plusieurs zones avec alerte sont configurées, la caractéristique du signal émis peut être configurée avec plusieurs valeurs possibles correspondant respectivement aux zones avec alertes. Chaque zone avec alerte est alors associée à une valeur de la caractéristique relative au signal émis, de sorte que le dispositif de réalité virtuelle, qui est configuré pour reconnaître ces différentes valeurs, peut détecter la valeur de la caractéristique pour le signal qu'il reçoit, et générer un signal d'alerte correspondant. Lorsque le signal est émis avec une portée qui couvre une zone avec alerte, il est émis avec la caractéristique prenant la valeur correspondante.

Conformément à l'invention, la caractéristique relative au signal émis peut en outre prendre au moins une deuxième valeur, cette deuxième valeur correspondant à la zone sans alerte lorsque la première valeur correspond à la zone avec alerte, et à l'inverse, cette deuxième valeur correspondant à une zone avec alerte lorsque la première valeur correspond à la zone sans alerte. Dans ce cas de figure, le signal émis a une portée qui est susceptible de couvrir la zone sans alerte, et lorsqu'il est émis avec une portée qui couvre la zone sans alerte, il est émis avec la caractéristique ayant la valeur correspondante. Le procédé proposé conformément à l'invention comprend en outre l'obtention d'un signal de non-alerte, sur réception du signal émis avec la caractéristique ayant la valeur correspondante.

La zone sans alerte est ainsi associée à une émission du signal, et à une valeur de la caractéristique relative au signal émis, ce qui présente l'avantage de permettre de détecter, dans un ou plusieurs modes de réalisation du système proposé, que l'utilisateur se trouve bien dans la première zone sans alerte. Dans un mode de réalisation, le système peut être configuré pour vérifier, lors de l'initialisation de l'expérience de réalité virtuelle, que l'utilisateur se trouve bien dans la zone sans alerte. Dans un ou plusieurs modes de réalisation, le système peut être configuré pour générer une alerte dès lors qu'il est détecté que l'utilisateur ne se trouve pas ou plus dans la zone sans alerte. Cela permet avantageusement de confirmer qu'il se trouve, le cas échéant, dans une des zones avec alerte, ou au contraire de diminuer le taux de fausses alarmes lorsqu'une information est remontée au système selon laquelle l'utilisateur se trouve dans une zone avec alerte mais aussi dans la zone sans alerte.

Dans un ou plusieurs modes de réalisation, un ou plusieurs dispositifs de réalité virtuelle utilisables par un utilisateur, dont un casque de réalité virtuelle, sont configurés pour fonctionner avec une unité de gestion de zones qui émet un signal sans fil tel que proposé. En particulier, le casque de réalité virtuelle, et éventuellement d'autres dispositifs de réalité virtuelle, peuvent être configurés pour recevoir le signal émis par l'unité de gestion de zones, pour détecter qu'une caractéristique relative au signal émis prend une première valeur, et sur détection que la caractéristique relative au signal émis prend la première valeur, obtenir un signal d'alerte, et le transmettre à une unité de commande du système.

Dans un mode de réalisation, seul le casque de réalité virtuelle, parmi éventuellement d'autres dispositifs de réalité virtuelle utilisables par l'utilisateur, peut être configuré pour mettre en oeuvre le procédé de commande proposé. Dans un autre mode de réalisation, un autre dispositif de réalité virtuelle, tel que, par exemple, une manette, peut être configurée, au lieu de ou en complément du casque de réalité virtuelle, pour mettre en oeuvre le procédé de commande proposé. Dans ce cas de figure, le dispositif de réalité virtuelle (par exemple la manette) peut être configuré pour être muni d'un récepteur de signal émis par l'unité de gestion de zones, et détecter qu'une caractéristique du signal reçu a une première valeur prédéterminée, puis obtenir un signal d'alerte, soit en le générant directement, soit en transmettant à une plateforme de gestion du système proposé un signal de détection. En fonction du mode de réalisation, la fonction de plateforme de gestion du système proposé peut être mise en oeuvre au sein du casque de réalité virtuelle, de l'unité de gestion de zones, d'une plateforme de gestion distante, ou d'une combinaison de deux ou plus de ces entités. Le procédé proposé peut aussi être distribué sur plusieurs dispositifs de réalité virtuelle. Un premier dispositif, par exemple une manette maintenue en main par l'utilisateur, peut être munie du récepteur de signal émis par l'unité de gestion de zones, et un deuxième dispositif, par exemple le casque porté sur sa tête par l'utilisateur, est muni d'un écran d'affichage permettant de notifier l'alerte à l'utilisateur.

Le procédé proposé peut ainsi être mis en oeuvre de manière centralisée ou distribuée selon le mode de réalisation choisi.

Dans les modes de mise en oeuvre distribuée, aucune plateforme de gestion distante n'est utilisée. Différentes fonctions relatives à la détection de présence de l'utilisateur dans une zone ou une autre, et à la génération d'alerte peuvent être mises en oeuvre au sein d'un ou plusieurs dispositifs de réalité virtuelle destinés à être portés par l'utilisateur (casque de réalité virtuelle, manettes, etc.) qui sont alors configurés pour fonctionner comme un sous-système autonome vis-à-vis de l'unité de gestion de zones. Dans ces modes de réalisation, un ou plusieurs de ces dispositifs de réalité virtuelle destinés à être portés par l'utilisateur peuvent alors être configurés pour générer le signal d'alerte, sur détection de la réception du signal émis par l'unité de gestion de zones avec la caractéristique ayant la première valeur ou, selon le mode de réalisation, sur non-détection de la réception du signal émis par l'unité de gestion de zones avec la caractéristique ayant la première valeur, puis transmettre ce signal d'alerte à l'unité de commande du système pour notification à l'utilisateur. Cette unité de commande peut elle-même être mise en oeuvre de manière centralisée au sein du seul casque de réalité virtuelle, ou de manière distribuée au sein de tous dispositifs de réalité virtuelle destinés à être portés par l'utilisateur. Dans le premier cas de figure, le dispositif de réalité virtuelle transmet le signal d'alerte généré au casque de réalité virtuelle qui pilote la fonction de notification de l'utilisateur sur réception d'un signal d'alerte. Dans le deuxième cas de figure, le dispositif de réalité virtuelle peut transmettre le signal d'alerte généré à une unité de notification utilisateur interne au dispositif, et éventuellement transmettre le signal d'alerte à un ou plusieurs autres dispositifs de réalité virtuelle portés par l'utilisateur.

Dans les modes de mise en oeuvre centralisée, différentes fonctions relatives à la détection de présence de l'utilisateur dans une zone ou une autre, et/ou à la génération d'alerte peuvent être mises en oeuvre au sein d'une plateforme de gestion, qui peut comprendre l'unité de gestion de zones et/ou une plateforme de gestion distante. Les dispositifs de réalité virtuelle destinés à être portés par l'utilisateur (casque de réalité virtuelle, manettes, etc.) peuvent alors être configurés pour fonctionner comme un sous-système piloté par l'unité de gestion de zones et/ou la plateforme distante, et transmettre à une plateforme de gestion un signal de détection, sur détection ou, selon le mode de réalisation, sur non-détection de la caractéristique ayant la première valeur,, sur la base du signal reçu. Le signal d'alerte peut alors être généré sur la base du signal de réception par la plateforme de gestion, puis retransmis à un ou plusieurs des dispositifs de réalité virtuelle portés par l'utilisateur, pour notification de l'utilisateur sur la base de ce signal d'alerte.

Dans un autre mode de réalisation, le mode de mise en oeuvre peut être mixte, c'est-à-dire combiner un mode de mise en oeuvre distribuée avec un mode de mise en oeuvre centralisée pour la mise en oeuvre des fonctions relatives à la détection de présence de l'utilisateur dans une zone, et/ou à la génération d'alerte, au sein de chaque entité du système proposé.

Bien que la description ci-dessus se concentre sur le signal d'alerte, l'homme du métier comprendra qu'elle n'est pas limitée à ce type de signal, et qu'en particulier elle s'applique en outre, dans un ou plusieurs modes de réalisation, à un signal de non-alerte correspondant à la zone sans alerte, tel que décrit ci-dessus.

Ainsi, le système de réalité proposé peut avantageusement être configuré pour qu'un dispositif de réalité virtuelle autre que le casque, porté par l'utilisateur, puisse obtenir un signal d'alerte lorsqu'il détecte, par l'intermédiaire du signal reçu, qu'il est dans une zone avec alerte, et transmettre ce signal d'alerte pour notification de l'utilisateur. Par exemple, un utilisateur portant un casque et tenant des manettes de réalité virtuelle, peut être notifié d'une alerte si lors d'un mouvement une de ses mains sort de la zone sans alerte (c'est-à-dire sort du cône correspondant à la zone sans alerte), alors même que son casque est toujours dans la zone sans alerte. Le procédé proposé permet ainsi avantageusement de multiplier les capteurs de présence dans une zone ayant un fonctionnement indépendant les uns des autres.

Dans un ou plusieurs modes de réalisation, le signal émis comprend un faisceau lumineux dont l'ouverture est modulée dans le temps, la première valeur et la deuxième valeur correspondant respectivement à une première valeur et une deuxième valeur d'ouverture du faisceau lumineux. Ces première et deuxième valeurs d'ouverture du faisceau lumineux peuvent, dans un ou plusieurs modes de réalisation, correspondre à des intervalles de valeurs d'ouverture du faisceau lumineux préconfigurés dans le système, et correspondant respectivement à différentes zones (par exemple une zone sans alerte et une zone avec alerte, ou deux zones avec alerte différentes). Cela permet avantageusement de détecter la présence de l'utilisateur dans une zone grâce à un ensemble prédéfini de valeurs d'ouverture du faisceau lumineux correspondant à la zone.

Comme illustré sur les figures 1a et 1c, la modulation de l'ouverture du faisceau lumineux peut produire l'émission d'un cône lumineux évidé dont le diamètre, correspondant à la caractéristique du signal émis, est agrandi progressivement dans le temps, de manière continue ou discrète, et selon une boucle d'émission pour émettre le signal en boucle entre une position initiale et une position finale. En fonction du mode de réalisation, le diamètre initial du cône lumineux peut correspondre au contour interne de la zone avec alerte la plus proche de la zone sans alerte, par exemple dans le cas où la portée du signal émis ne couvre pas la zone sans alerte, ou à une ouverture quasiment nulle, par exemple dans le cas où la portée du signal émis couvre la zone sans alerte. Le diamètre final du cône lumineux peut dans un mode de réalisation correspondre au contour externe de la zone avec alerte la plus éloignée de la zone sans alerte.

Dans le cas où le diamètre du cône lumineux évidé est augmenté de manière discrète, chaque itération de la boucle peut comprendre l'émission du signal lumineux formant un cône lumineux ayant un diamètre augmenté d'un pas prédéfini par rapport au diamètre du cône lumineux formé par l'émission du signal lors de la précédente itération de la boucle.

La valeur du pas d'augmentation discrète du diamètre du cône peut être choisie en fonction du degré de résolution que l'on souhaite obtenir pour la définition des zones (zone(s) avec alerte et éventuellement zone sans alerte).

En référence aux figures 1a et 1c, l'unité de gestion de zones (5) peut être comprendre, dans un ou plusieurs modes de réalisation, un émetteur de signal (non représenté sur la figure), configuré pour émettre un signal, une caractéristique relative au signal émis pouvant prendre une première valeur correspondant, selon le mode de réalisation, à la première zone ou à la deuxième zone. Différents modes de réalisation peuvent être adoptés pour la mise en oeuvre de l'émetteur de l'unité de gestion de zones, comme illustré par les exemples de la figure 3.

Dans un ou plusieurs modes de réalisation, l'émetteur peut comprendre une source de signal lumineux, et un masque circulaire ou polygonal, placé en regard de la source pour définir sur la surface sur laquelle se trouve l'utilisateur une portée du signal émis de la forme voulue.

Dans un ou plusieurs modes de réalisation, l'émetteur peut comprendre une source de faisceau lumineux, en regard de laquelle est placé un diaphragme contrôlé de manière à piloter l'ouverture d'un cône lumineux comme décrit ci-dessus. Dans un mode de réalisation, le diaphragme peut être de type optique pour une ouverture continue permettant d'agrandir ou de diminuer de manière continue l'ouverture du cône lumineux, comme illustré sur la figure 3(c). Dans un autre mode de réalisation, le diaphragme peut être de type mécatronique à barillet prévu pour quatre positions différentes correspondant respectivement à quatre ouvertures de cône différentes (dont une correspondant à un cône de configuration (9d)), pouvant correspondre respectivement à une position de configuration (12d), une position de zone sans alerte (12a), une position de première zone avec alerte (12b), et une position de deuxième zone avec alerte (12c), comme illustré sur les figures 3(b) et 3(d).

La figure 3(a) montre un mode de réalisation de l'émetteur utilisant un diaphragme à diodes électroluminescentes (en anglais, « Light Emitting Diode », ou LED), piloté électroniquement de manière à émettre différents signaux lumineux dont les portées respectives définissent sur la surface sur laquelle se trouve l'utilisateur des contours respectifs tels que configurés. La figure 3(a) illustre de manière non limitative le cas spécifique qu'un diagramme à LED configuré pour quatre positions, pouvant correspondre respectivement à une position de configuration (13d), une position de zone sans alerte (13a), une position de première zone avec alerte (13b), et une position de deuxième zone avec alerte (13c). Le mode de réalisation utilisant un pavé de LED contrôlé électroniquement, comme illustré sur la figure 3(a), permet avantageusement de définir par configuration du système des contours de formes voulues pour s'adapter aux spécificités de l'espace dans lequel l'utilisateur souhaite évoluer (surface disponible, contour de la surface disponible, objets à éviter, etc.), tel que décrit ci-dessus en référence à l'exemple illustré par la figure 1(e).

Les modes de réalisation utilisant un barillet rotatif (figure 3(b)) ou un masque à LED (figure 3(a)) présentent en outre l'avantage de permettre la configuration et l'utilisation de 3 ou 4 zones, sans avoir d'effets de mouvement ou de latence.

Dans un ou plusieurs modes de réalisation, l'émetteur peut comprendre une source de signal configurée pour émettre un signal de type douche sonore à ultrasons.

Dans un ou plusieurs modes de réalisation l'émetteur de l'unité de gestion de zones peut être un émetteur de signal lumineux configuré pour émettre un signal de transmission de données par voie optique, comme par exemple un signal de type LiFi (de l'anglais « Light Fidelity »). Dans ce cas de figure, l'unité de gestion de zones et au moins un dispositif de réalité virtuelle utilisé par l'utilisateur, comme par exemple le casque de réalité virtuelle, peuvent être configurés pour une transmission de données par voie optique, unidirectionnelle ou bidirectionnelle en fonction du mode de réalisation, et en particulier pour effectuer des communications de type LiFi selon le protocole de communication IEEE 802.15.7.

Ce mode de réalisation présente l'avantage de permettre la transmission de données par voie optique entre l'unité de gestion de zones, et le dispositif de réalité virtuelle configuré pour cela. Dans un ou plusieurs modes de réalisation, ces transmissions de données peuvent être unidirectionnelles, en étant effectuées depuis l'unité de gestion de zones vers un ou plusieurs dispositifs de réalité virtuelle utilisés par l'utilisateur. Dans d'autres modes de réalisation, ces transmissions de données peuvent être bidirectionnelles, et inclure, outre la voie descendante pour des données transmises depuis l'unité de gestion de zones vers un ou plusieurs dispositifs de réalité virtuelle utilisés par l'utilisateur, une voie montante en sens inverse, c'est-à-dire pour des données transmises depuis un ou plusieurs dispositifs de réalité virtuelle utilisés par l'utilisateur vers l'unité de gestion de zones. La mise en oeuvre d'une voie montante de transmission de données permet avantageusement de prévoir une architecture distribuée de traitement des données relatives aux alertes ou à la configuration du système, ce traitement de données pouvant alors être distribué vers une plateforme de gestion du système (qui pourra être mise en oeuvre, en tout ou partie, au sein de l'unité de gestion de zones ou au sein d'une plateforme distante accessible via un ou plusieurs réseaux de communication de données).

La caractéristique du signal émis permettant la détection des zones par un dispositif de réalité virtuelle utilisé par l'utilisateur peut être de différents types en fonction du mode de réalisation.

Dans un ou plusieurs modes de réalisation, le signal émis peut être modulé, et la caractéristique du signal émis correspondre à cette modulation du signal. Par exemple, dans un mode de réalisation, la modulation lumineuse d'un signal LiFi utilisant des variations d'intensité lumineuse d'une ou plusieurs LED permet de transmettre à un ou plusieurs récepteurs une information d'identification de zone permettant au récepteur de différencier des zones distinctes préconfigurées.

Tout autre caractéristique du signal émis peut être modulée de manière à associer une valeur de modulation avec une valeur de caractéristique du signal émis, différentes valeurs ou différents ensembles de valeurs de caractéristique du signal émis étant respectivement associées à des zones distinctes.

Dans le cas d'un signal émis de type lumineux, la longueur d'onde du signal peut par exemple être modulée pour associer à chaque zone à distinguer une couleur donnée.

Dans un ou plusieurs modes de réalisation, le procédé proposé pourra comprendre la génération sur une interface utilisateur d'un dispositif de réalité virtuelle du système proposé d'une notification utilisateur, sur la base du signal d'alerte ou, en fonction, du signal de non-alerte. En fonction du mode de réalisation choisi, la ou les notifications présentées à l'utilisateur pourront être de différents types et revêtir différentes formes : visuelles, auditives, haptiques, vibratoires, etc.

Dans un mode de réalisation, le système de réalité virtuelle proposé peut être configuré pour intégrer directement, par exemple via des librairies logicielles (en anglais, « Software Development Kit » ou « SDK »), ces notifications dans l'expérience de réalité virtuelle afin d'avantageusement les inclure de manière contextuelle, transparente et immersive. La figure 4a illustre un tel schéma de superposition d'alerte, avec un point (30c) venant s'afficher en superposition en haut à gauche de l'écran d'affichage du contenu de réalité virtuelle, pour notifier visuellement à l'utilisateur une alerte de présence dans la deuxième zone avec alerte (9c), un point (30b) venant s'afficher en superposition au milieu à gauche de l'écran d'affichage du contenu de réalité virtuelle, pour notifier visuellement à l'utilisateur une alerte de présence dans la première zone avec alerte (9b), ou aucun point ne venant s'afficher en superposition sur l'écran d'affichage du contenu de réalité virtuelle, pour notifier visuellement à l'utilisateur une présence dans la zone sans alerte (9a).

Dans un mode de réalisation, la notification de l'utilisateur pourra être effectuée par le biais d'une modification du contenu de réalité virtuelle présenté à l'utilisateur, ce qui présente l'avantage de présenter une notification qui reste implicite et subtile, tout en ne sollicitant pas les ressources du ou des dispositifs de réalité virtuels portés par l'utilisateur pour la présentation de notifications sous d'autres formes. Par exemple, la notification d'un utilisateur peut utiliser une modulation de la qualité de réception et/ou d'affichage du flux de contenu de réalité virtuelle en fonction de la détection de présence dans une des zones prédéfinies. Comme illustré sur la figure 4b, la qualité du flux vidéo fourni aux dispositifs de réalité virtuelle portés par l'utilisateur, et notamment l'écran de son casque de réalité virtuelle, peut être modulée pour être à un niveau Ultra Haute Définition (UHD, de l'anglais « Ultra High Definition) lorsque la présence de l'utilisateur est détectée dans la zone sans alarme (9a), ou lorsque la présence de l'utilisateur n'est pas détectée dans une zone avec alarme (9b, 9c), à un niveau de définition standard (SD, de l'anglais « Standard Définition »), moins élevé que le niveau UHD, lorsque la présence de l'utilisateur est détectée dans la première zone avec alarme (9b), et le flux vidéo peut être interrompu (HC, pour « Hors Connexion ») lorsque la présence de l'utilisateur est détectée dans la première zone avec alarme (9c).

Dans un mode de réalisation, le système de réalité virtuelle proposé peut être configuré pour qu'en cas de sortie de zone, la notification s'accompagne d'une restitution visuelle et/ou sonore de ce qui se passe dans la pièce, afin de lever un doute par exemple, et décider de poursuivre ou arrêter l'expérience VR le cas échéant. Dans un mode de réalisation, une caméra et/ou un microphone pourront être ajoutés sur le casque de réalité virtuelle ou au plafond afin de restituer l'environnement extérieur sans que l'utilisateur n'enlève son casque.

Dans un ou plusieurs modes de réalisation, la configuration initiale du système proposé, permettant de définir les zones ainsi que les notifications utilisateur associées, sera effectuée lors d'une phase de configuration du système préalable à son utilisation. Cette phase de configuration pourra utiliser un signal de configuration, tel que celui (9d) illustré à la figure 3, afin de distinguer la phase de configuration d'une phase d'utilisation normale du système une fois configuré. Dans un mode de réalisation, l'utilisateur pourra effectuer la configuration du système en déclenchant une phase de configuration (initiant une phase de configuration au niveau de chaque dispositif de réalité virtuelle et possiblement, en fonction du mode de réalisation, au niveau d'une plateforme de gestion du système mise en oeuvre, en tout ou partie, au sein de l'unité de gestion de zones), puis en se déplaçant dans l'espace pour successivement apprendre au système les contours des différentes zones (avec alerte et sans alerte), éventuellement après avoir effectué une reconnaissance de la frontière de la surface se trouvant sous la portée du signal sans fil émis par l'unité de gestion de zones.

Dans un mode de réalisation, le système proposé est en outre configuré pour effectuer une détection des intrusions (par exemple d'une personne, d'un objet ou d'un animal) dans une des zones gérées par le système (zone sans alerte et zone(s) avec alerte). Cette détection d'intrusion peut être mise en oeuvre dans un mode de réalisation en utilisant un détecteur infrarouge dont l'unité de gestion de zones peut être équipée. L'unité de gestion de zones peut ainsi comprendre en outre un détecteur infrarouge configuré pour détecter une intrusion dans une des zones gérées par le système, une intrusion correspondant à la présence dans une des zones gérées d'une personne autre que l'utilisateur, d'un objet (par exemple un ballon qui roule jusqu'à l'une des zones), ou d'un animal, dans chaque cas ne se trouvant pas dans une zone lors de la configuration du système.

Dans un mode de réalisation, illustré sur la figure 5a, l'utilisateur pourra utiliser un casque de réalité virtuelle en fonctionnement autonome, en ce sens que le contenu de réalité virtuelle est embarqué dans une mémoire du casque. Dans ce cas de figure, la sécurisation du périmètre d'utilisation peut avantageusement être réalisée au moyen d'un cône infrarouge ou d'une autre technologie, avec pour sommet un émetteur au plafond et un ou plusieurs récepteurs sur le casque, les bracelets ou manettes de réalité virtuelle, voire même intégrés à un tapis de sol. Dans ce cas de figure, la configuration du système proposé pourra être mise en mémoire au sein d'un dispositif de réalité virtuelle, comme par exemple le casque de réalité virtuelle.

Dans un autre mode de réalisation, illustré sur la figure 5b, l'utilisateur pourra utiliser un casque de réalité virtuelle en fonctionnement commandé, en ce sens que le contenu de réalité virtuelle est hébergé par un serveur à distance, accessible via un ou plusieurs réseaux de communication de données. Dans ce cas de figure, la sécurisation du périmètre d'utilisation peut avantageusement être réalisée au moyen d'un cône de diffusion et d'interaction bidirectionnelle, comme décrit ci-dessus, avec pour sommet un émetteur/récepteur (par exemple de type LiFi), et des émetteurs récepteurs dans le casque de réalité virtuelle et/ou les bracelets ou manettes de réalité virtuelle. Dans ce cas de figure, la configuration du système proposé pourra être mise en mémoire au sein du serveur distant.

Le procédé proposé permet avantageusement, y compris dans les deux cas décrits ci-dessus, de détecter les entrées/sorties de zone et d'avertir l'utilisateur de manière appropriée. L'entrée de zone se produit par exemple lorsqu'une personne tierce, un animal ou un objet se retrouve trop près de l'utilisateur. Une fois la levée de doute réalisée, la reprise peut se faire à l'aide d'un assistant vocal, évitant ainsi d'enlever le matériel ou une configuration supplémentaire.

Dans un mode de réalisation plus élaboré, le dispositif de monitoring de zone peut être doublé afin de gérer l'espace de manière stéréoscopique et ainsi repérer l'orientation spatiale de l'utilisateur : pour mieux l'avertir de franchissement des zones prédéfinies mais potentiellement aussi pour mieux adapter le contenu VR, de manière totalement immersive.

La figure 6 montre un exemple d'architecture de dispositif de réalité virtuelle selon un ou plusieurs modes de réalisation.

En référence à la figure 6, dans un ou plusieurs modes de réalisation, le dispositif de réalité virtuelle (50) (par exemple un casque de réalité virtuelle, une manette ou un bracelet) pourra comprendre une unité de communication sans-fil (51), un contrôleur (52), une unité d'alimentation (53), une unité de réalité virtuelle (54), une unité de gestion alerte zone (55), une unité de gestion notification utilisateur (56), une interface utilisateur (IHM) (57), et une mémoire (58). Selon le mode de réalisation, l'unité de communication sans-fil (51), l'unité d'alimentation (53), l'unité de réalité virtuelle (54), l'unité de gestion alerte zone (55), l'unité de gestion notification utilisateur (56), l'interface utilisateur (IHM) (57), et la mémoire (58) pourront être couplées de manière opérationnelle au contrôleur (52) par un bus de communication (59), ou par tout lien de communication, comprenant éventuellement un ou plusieurs connecteurs matériels. Dans l'architecture du dispositif (50) illustré sur la figure 6, l'ensemble des unité de communication sans-fil (51), contrôleur (52), unité d'alimentation (53), l'unité de réalité virtuelle (54), unité de gestion alerte zone (55), unité de gestion notification utilisateur (56), interface utilisateur (IHM) (57), mémoire (58) et bus de communication (59) forme un dispositif de réalité virtuelle selon un ou plusieurs modes de réalisation, qui peut par ailleurs inclure d'autres composants, unités, fonctions, non représentés sur la figure.

Le contrôleur (52) peut comprendre un ou plusieurs processeurs, comme un microprocesseur, un microcontrôleur ou un autre processeur matériel, une mémoire associée (par exemple, une mémoire vive (RAM), une mémoire cache, une mémoire flash, etc.), et être apte à être configuré pour piloter l'unité de communication sans-fil (51), l'unité d'alimentation (53), l'unité de réalité virtuelle (54), l'unité de gestion alerte zone (55), l'unité de gestion notification utilisateur (56), l'interface utilisateur (IHM) (57), et la mémoire (58) afin de commander l'utilisation du dispositif (50) selon un ou plusieurs modes de réalisation du procédé proposé, par exemple en exécutant un programme d'ordinateur comprenant des portions de code pour la mise en oeuvre d'un procédé de commande tel que proposé dans la présente demande. En fonction du mode de réalisation, une mémoire associée du contrôleur (52), externe ou interne au contrôleur (52), contient des instructions qui, lorsqu'elles sont exécutées par le contrôleur (52), amènent ce contrôleur (52) à effectuer ou contrôler les parties unité de communication sans-fil (51), unité d'alimentation (53), unité de réalité virtuelle (54), unité de gestion alerte zone (55), unité de gestion notification utilisateur (56), interface utilisateur (IHM) (57), et mémoire (58) des exemples de mise en oeuvre du procédé proposé décrits dans la présente demande. Le contrôleur (52) peut être un composant implémentant un processeur ou une unité de calcul pour la commande d'un système de réalité virtuelle selon le procédé proposé et le contrôle de l'unité de communication sans-fil (51), de l'unité d'alimentation (53), de l'unité de réalité virtuelle (54), de l'unité de gestion alerte zone (55), de l'unité de gestion notification utilisateur (56), de l'interface utilisateur (IHM) (57), et de la mémoire (58) du dispositif (50), comme par exemple un microcontrôleur.

L'unité de gestion alerte zone (55) et l'unité de gestion notification utilisateur (56) peuvent être mise en oeuvre, selon le mode de réalisation choisi, sous la forme d'un ou plusieurs logiciels, ou d'une combinaison d'un ou plusieurs matériels et d'un ou plusieurs logiciels, configurés pour la mise en oeuvre de modes de réalisation du procédé de commande décrit dans la présente demande. En particulier, le dispositif de réalité virtuelle (50) peut être configuré par l'intermédiaire de l'unité de gestion alerte zone (55) pour, sur détection de la caractéristique d'un signal reçu ayant une deuxième valeur prédéfinie, obtenir un signal d'alerte, selon le mode de réalisation, en générant ce signal d'alerte, ou en l'obtenant depuis un autre dispositif de réalité virtuelle, depuis une unité de gestion de zone émettant le signal, ou depuis une plateforme de gestion distante, selon un ou plusieurs modes de réalisation décrits dans la présente demande. Le dispositif de réalité virtuelle (50) peut être configuré par l'intermédiaire de l'unité de gestion notification utilisateur (56) pour transmettre un signal d'alerte à une unité de commande du système qui peut être, selon le mode de réalisation, intégrée au dispositif (50), distribuée sur une pluralité de dispositifs de réalité virtuelle (parmi lesquels le dispositif (50)), et/ou intégrée à une plateforme de gestion distante, pour notifier un utilisateur du système de réalité virtuelle auquel le dispositif (50) est intégré, selon un ou plusieurs modes de réalisation décrits dans la présente demande.

La partie logicielle de l'unité de gestion alerte zone (55) et/ou de l'unité de gestion notification utilisateur (56) peut constituer ou faire partie d'un logiciel de pilotage du dispositif (50).

L'unité de communication sans-fil (51) peut être mise en oeuvre, selon le mode de réalisation choisi, sous la forme d'une combinaison d'un ou plusieurs matériels et d'un ou plusieurs logiciels, et comprendre, selon le mode de réalisation choisi, un ou plusieurs matériels de communication radiofréquence et/ou optique, et un logiciel de pilotage d'unité de communication, par exemple exécutable par le contrôleur (52) ou, dans une autre architecture du dispositif, exécutable par un processeur de l'unité de communication sans-fil (51), et chargé dans une mémoire accessible par un processeur configuré pour exécuter le logiciel de pilotage d'unité de communication. Dans un ou plusieurs modes de réalisation, l'unité de communication sans-fil (51) peut comprendre une interface de communication de données.

Par exemple, l'unité de communication sans-fil (51) pourra être configurée pour utiliser des liens de communication de type « Bluetooth », « Bluetooth Low Energy » (BLE), « Bluetooth smart », WiFi ou tout lien de communication basé sur les protocoles IEEE802.11x, "Zigbee" et/ou tout lien de communication basé sur les protocoles IEEE802.15.4, "Z-Wave", "6LowPAN" (IPv6 Low-power wireless Personal Area Network), "Thread", "Sigfox", "Neul", "LoRa", et/ou basé sur les spécifications développées par le groupe 3GPP pour les réseaux « LTE-M », tout lien de type communication en champ proche (NFC, de l'anglais « Near Field Communication »), et/ou tout lien de communication de données par voie optique, notamment basé sur les protocoles IEEE802.15.7, comme par exemple tout lien de communication de type « LiFi », en mode unidirectionnel ou bidirectionnel, selon les cas.

L'unité d'alimentation (53) peut être mise en oeuvre, selon le mode de réalisation choisi, sous la forme d'une combinaison d'un ou plusieurs matériels et d'un ou plusieurs logiciels, et comprendre un ou plusieurs matériels d'alimentation électrique, tels qu'une ou plusieurs batteries, et un logiciel de pilotage d'alimentation, par exemple exécutable par le contrôleur (52) ou, dans une autre architecture du dispositif, exécutable par un processeur de l'unité d'alimentation (53), et chargé dans une mémoire accessible par un processeur configuré pour exécuter le logiciel de pilotage d'alimentation.

Le dispositif de réalité virtuelle (50) peut être mis en oeuvre sous forme logicielle, auquel cas il prend la forme d'un programme exécutable par un processeur, sous forme matérielle (ou « hardware »), ou sous forme d'une combinaison d'éléments matériels et logiciels.

En fonction du mode de réalisation, différentes architectures du dispositif (50) peuvent être adoptées, tant pour la partie matérielle du dispositif, que pour la partie logicielle du dispositif, le cas échéant.

L'homme du métier comprendra que le procédé proposé n'est pas limité à une architecture particulière du dispositif de réalité virtuelle (50), de l'unité de communication sans-fil (51), du contrôleur (52), de l'unité d'alimentation (53), de l'unité de réalité virtuelle (54), de l'unité de gestion alerte zone (55), de l'unité de gestion notification utilisateur (56), de l'interface utilisateur (IHM) (57), de la mémoire (58) et du bus de communication (59), ou du couplage entre ces éléments illustrant à titre d'exemple un mode de réalisation sur la figure 6.

### Application industrielle

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas, l'invention n'étant limitée que par ce qui est défini par les revendications. En outre, dans certains modes de réalisation, certains actes, actions ou évènements sont effectués ou se produisent concurremment et non pas successivement.

Bien que décrits à travers un certain nombre d'exemples de réalisation détaillés, le procédé de commande proposé et le dispositif pour la mise en oeuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, dans la limite de ce qui est défini par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention, dans la limite de ce qui est défini par les revendications. En outre, dans la limite de ce qui est défini par les revendications, il se peut que certains systèmes et équipements décrits ci-dessus n'incorporent pas la totalité des modules et fonctions décrits pour les modes de réalisation préférés.

## Revendications

1. Procédé de commande d'un système (1) d'alerte qui est un système de réalité virtualisée comprenant un dispositif (2, 3a, 3b) de réalité virtualisée, le procédé comprenant, au système d'alerte :
- recevoir (20), par le dispositif lorsqu'il est porté par un utilisateur, un signal (8) sans fil émis vers une surface sur laquelle se trouve l'utilisateur, dont la portée définit sur la surface une pluralité de zones comprenant une première zone (9a) sans alerte et une deuxième zone (9b, 9c) avec alerte, une caractéristique relative au signal émis pouvant prendre une valeur correspondant à la deuxième zone, dite première valeur ;
- sur détection (21b), par le dispositif, de la caractéristique ayant la première valeur, obtenir (22) un signal d'alerte, et
- transmettre (23) le signal d'alerte à une unité de commande du système d'alerte pour notifier l'utilisateur,
**caractérisé en ce que** :
la caractéristique relative au signal émis peut en outre prendre une deuxième valeur correspondant à la première zone, le procédé comprenant en outre, sur réception du signal émis avec la caractéristique ayant la deuxième valeur correspondant à la première zone, obtenir un signal de non-alerte.

2. Procédé selon la revendication 1, dans lequel le signal émis comprend un faisceau lumineux dont l'ouverture est modulée dans le temps, la première et la deuxième valeurs correspondant respectivement à au moins une première valeur et au moins une deuxième valeur d'ouverture du faisceau lumineux.

3. Procédé selon la revendication 2, dans lequel le faisceau lumineux transmet un signal optique de transmission de données, par exemple de type LiFi.

4. Procédé selon l'une quelconque des revendications 1 à 3, comprenant en outre : générer le signal d'alerte sur détection de la réception du signal émis avec la caractéristique ayant la valeur correspondant à la deuxième zone.

5. Procédé selon l'une quelconque des revendications 1 à 3, comprenant en outre : sur détection de la réception du signal émis avec la caractéristique ayant la valeur correspondant à la deuxième zone, transmettre à une plateforme de gestion de système un signal de détection, et recevoir le signal d'alerte.

6. Procédé selon l'une quelconque des revendications précédentes, comprenant en outre : générer sur une interface utilisateur du dispositif de réalité virtualisée du système de réalité virtualisée une notification utilisateur sur la base du signal d'alerte.

7. Procédé selon l'une quelconque des revendications précédentes, comprenant en outre : recevoir un message d'intrusion dans une de la pluralité de zones, et générer une notification utilisateur sur la base du message d'intrusion.

8. Procédé selon l'une quelconque des revendications précédentes, comprenant en outre : configurer le système par apprentissage des zones de la pluralité de zones.

9. Procédé selon l'une quelconque des revendications précédentes, comprenant en outre : notifier l'utilisateur du signal d'alerte du système en modifiant le contenu de réalité virtualisée présenté à l'utilisateur.

10. Système d'alerte qui est un système de réalité virtualisée comprenant un dispositif de réalité virtualisée comprenant un processeur et un récepteur de communication sans-fil couplé de manière opérationnelle au processeur, le dispositif étant configuré pour la mise en oeuvre d'un procédé selon l'une quelconque des revendications 1 à 9.

11. Programme d'ordinateur, chargeable dans une mémoire associée à un processeur, et comprenant des portions de code pour la mise en oeuvre d'un procédé selon l'une quelconque des revendications 1 à 9 lors de l'exécution dudit programme par le processeur.

12. Ensemble de données représentant, par exemple par voie de compression ou d'encodage, un programme d'ordinateur selon la revendication 11.

13. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en oeuvre le procédé de l'une quelconque des revendications 1 à 9.

## Patentansprüche

1. Verfahren zur Steuerung eines Warnsystems (1), das ein System der virtuellen Realität ist, das eine Vorrichtung der virtuellen Realität (2, 3a, 3b) beinhaltet, wobei das Verfahren an dem Warnsystem Folgendes beinhaltet:
- Empfangen (20), durch die Vorrichtung, wenn diese von einem Benutzer getragen wird, eines drahtlosen Signals (8), das in Richtung einer Fläche, auf der sich der Benutzer befindet, gesendet wird und dessen Reichweite auf der Fläche eine Vielzahl von Bereichen definiert, die einen ersten Bereich (9a) ohne Warnung und einen zweiten Bereich (9b, 9c) mit Warnung beinhaltet, wobei eine Eigenschaft des gesendeten Signals einen dem zweiten Bereich entsprechenden Wert annehmen kann, der als erster Wert bezeichnet wird;
- bei Detektion (21b), durch die Vorrichtung, der Eigenschaft, die den ersten Wert aufweist, Erhalten (22) eines Warnsignals, und
- Übertragen (23) des Warnsignals an eine Steuereinheit des Warnsystems, um den Benutzer zu benachrichtigen,
**dadurch gekennzeichnet, dass**:
die Eigenschaft des gesendeten Signals ferner einen dem ersten Bereich entsprechenden zweiten Wert annehmen kann, wobei das Verfahren ferner bei Empfang des gesendeten Signals mit der Eigenschaft, die den dem ersten Bereich entsprechenden zweiten Wert aufweist, das Erhalten eines Nicht-Warnsignals beinhaltet.

2. Verfahren nach Anspruch 1, wobei das gesendete Signal einen Lichtstrahl beinhaltet, dessen Öffnung zeitmoduliert ist, wobei der erste und der zweite Wert jeweils mindestens einem ersten Wert und mindestens einem zweiten Wert der Öffnung des Lichtstrahls entsprechen.

3. Verfahren nach Anspruch 2, wobei der Lichtstrahl ein optisches Datenübertragungssignal, zum Beispiel vom Typ Li-Fi, überträgt.

4. Verfahren nach einem beliebigen der Ansprüche 1 bis 3, das ferner Folgendes beinhaltet: Erzeugen des Warnsignals bei Detektion des Empfangs des gesendeten Signals mit der Eigenschaft, die den dem zweiten Bereich entsprechenden Wert aufweist.

5. Verfahren nach einem beliebigen der Ansprüche 1 bis 3, das ferner Folgendes beinhaltet: bei Detektion des Empfangs des gesendeten Signals mit der Eigenschaft, die den dem zweiten Bereich entsprechenden Wert aufweist, Übertragen eines Detektionssignals an eine Systemverwaltungsplattform und Empfangen des Warnsignals.

6. Verfahren nach einem beliebigen der vorhergehenden Ansprüche, das ferner Folgendes beinhaltet: Erzeugen, auf einer Benutzeroberfläche der Vorrichtung der virtuellen Realität des Systems der virtuellen Realität, einer Benutzerbenachrichtigung auf Basis des Warnsignals.

7. Verfahren nach einem beliebigen der vorhergehenden Ansprüche, das ferner Folgendes beinhaltet: Empfangen einer Nachricht über das Eindringen in einen der Vielzahl von Bereichen und Erzeugen einer Benutzerbenachrichtigung auf Basis der Eindringnachricht.

8. Verfahren nach einem beliebigen der vorhergehenden Ansprüche, das ferner Folgendes beinhaltet:
Konfigurieren des Systems durch Anlernen der Bereiche der Vielzahl von Bereichen.

9. Verfahren nach einem beliebigen der vorhergehenden Ansprüche, das ferner Folgendes beinhaltet:
Benachrichtigen des Benutzers über das Warnsignal des Systems durch Verändern des Inhalts der virtuellen Realität, der dem Benutzer präsentiert wird.

10. Warnsystem, das ein System der virtuellen Realität ist, das eine Vorrichtung der virtuellen Realität beinhaltet, beinhaltend einen Prozessor und einen Empfänger für drahtlose Kommunikationen, der mit dem Prozessor betriebsfähig gekoppelt ist, wobei die Vorrichtung zur Umsetzung eines Verfahrens nach einem beliebigen der Ansprüche 1 bis 9 konfiguriert ist.

11. Computerprogramm, das in einen Speicher, der mit einem Prozessor assoziiert ist, geladen werden kann und das bei Ausführung des Programms durch den Prozessor Codeabschnitte zur Umsetzung eines Verfahren nach einem beliebigen der Ansprüche 1 bis 9 beinhaltet.

12. Datensatz, der, beispielsweise durch Komprimierung oder Codierung, ein Computerprogramm nach Anspruch 11 darstellt.

13. Nichttransitorisches Speichermedium für ein computerausführbares Programm, beinhaltend einen Datensatz, der ein oder mehrere Programme darstellt, wobei das eine oder die mehreren Programme Anweisungen beinhalten, um bei Ausführung des einen oder der mehreren Programme durch einen Computer, der eine Verarbeitungseinheit beinhaltet, die mit Speichermitteln und einem Eingangs-/Ausgangsschnittstellenmodul betriebsfähig gekoppelt ist, den Computer dazu zu veranlassen, das Verfahren nach einem beliebigen der Ansprüche 1 bis 9 umzusetzen.

## Claims

1. Method for controlling a warning system (1) which is a virtual-reality system comprising a virtual-reality device (2, 3a, 3b), the method comprising, in the warning system:
- the device receiving (20), when it is worn by a user, a wireless signal (8) sent to a surface which the user is on, the range of which defines, on the surface, a plurality of regions comprising a first region (9a) without a warning and a second region (9b, 9c) with a warning, a characteristic relating to the sent signal being able to take a value corresponding to the second region, referred to as the first value;
- upon the device detecting (21b) the characteristic having the first value, obtaining (22) a warning signal, and
- transmitting (23) the warning signal to a control unit for the warning system in order to notify the user, **characterized in that**:
the characteristic relating to the sent signal may, furthermore, take a second value corresponding to the first region, the method comprising, furthermore, upon receiving the sent signal with the characteristic having the second value corresponding to the first region, obtaining a non-warning signal.

2. Method according to Claim 1, wherein the sent signal comprises a light beam, the spread of which is modulated over time, the first and the second values corresponding to at least one first value and at least one second spread value for the light beam, respectively.

3. Method according to Claim 2, wherein the light beam transmits an optical data transmission, for example Li-Fi, signal.

4. Method according to any one of Claims 1 to 3, furthermore comprising: generating the warning signal upon detecting that the sent signal with the characteristic having the value corresponding to the second region has been received.

5. Method according to any one of Claims 1 to 3, comprising, furthermore: upon detecting that the sent signal with the characteristic having the value corresponding to the second region has been received, transmitting a detection signal to a system management platform and receiving the warning signal.

6. Method according to any one of the preceding claims, comprising, furthermore: generating, on the basis of the warning signal, a user notification on a user interface of the virtual-reality device of the virtual-reality system.

7. Method according to any one of the preceding claims, comprising, furthermore: receiving a message that there has been an intrusion into one of the plurality of regions, and generating a user notification on the basis of the intrusion message.

8. Method according to any one of the preceding claims, comprising, furthermore: configuring the system by learning of the regions of the plurality of regions.

9. Method according to any one of the preceding claims, comprising, furthermore: notifying the user of the warning signal of the system by modifying the virtual-reality content presented to the user.

10. Warning system which is a virtual-reality system comprising a virtual-reality device comprising a processor and a wireless communication receiver which is operationally coupled to the processor, the device being configured to implement a method according to any one of Claims 1 to 9.

11. Computer program which may be loaded into a memory associated with a processor and comprises portions of code for implementing a method according to any one of Claims 1 to 9 when the processor executes said program.

12. Data set representing, for example through compression or encoding, a computer program according to Claim 11.

13. Medium for non-transiently storing a computer-executable program, comprising a data set representing one or more programs, said one or more programs comprising instructions for, when said one or more programs are executed by a computer comprising a processing unit which is operationally coupled to memory means and to an input/output interface module, causing the computer to implement the method according to any one of Claims 1 to 9.
